# EUROPEAN PATENT SPECIFICATION

(11) **EP 3 273 153 B1**
(45) Date of publication and mention of the grant of the patent: **30.10.2019**
(21) Application number: 16180120.4
(22) Date of filing: 19.07.2016
(51) Int. Cl.: F21V 13/04, F21V 14/04, G02B 19/00, F21K 9/65, F21V 7/00, G02B 5/00, F21Y 115/10

(54) **VARIABLE ILLLUMINATION OPTICAL SYSTEM**
VARIABLES OPTISCHES BELEUCHTUNGSSYSTEM
SYSTÈME OPTIQUE POUR ECLAIRAGE VARIABLE

(43) Date of publication of application: 24.01.2018
(73) Proprietor: ZG Lighting Benelux, 2870 Puurs (BE)
(72) Inventor: Hagenbring, Melanie, 1011 LM Amsterdam (NL); Koning, Mart, 3033 HG Rotterdam (NL)
(74) Representative: Kiwit, Benedikt

(56) References cited:
- WO-A1-2008/149277
- US-A1- 2006 158 887
- US-A1- 2012 182 764

## Description

The present invention relates to an optical system comprising a light source, a lens and a reflector which cooperate with each other to allow for an adjustment of the light distribution of the light emitted by the optical system.

In the prior art there are known optical systems which allow for an adjustment of the light distribution. For this, many different parts of the corresponding system are arranged in a complex manner and require a complex adjustment system to vary the light distribution while complexity of the system increases with increasing accuracy.

WO 2008 / 149 277 A1 discloses a variable beam illumination assembly comprising a light source, an optical component and a positioning mechanism, which comprises a movable member and at least one actuator and which is configured to move either the optical component or the light source or both to different positions along a mechanical axis.

US 2012/182764 A1 discloses a lens for illumination assemblies to redirect light in a lateral direction.

US 2006/158887 A1 discloses a variable beam illumination assembly comprising a light source with a movable lens surrounded by a reflector. The lens and the reflector have corresponding guiding means for a sliding cooperation to change the position of the lens with respect to the reflector.

It is thus an object of the present invention to provide an optical system as defined herein above which allows for an easy adjustment of the light distribution.

These and other objects, which become apparent upon reading the following description, are solved by the subject-matter of the independent claim. The dependent claims study further the central idea of the present invention.

According to the invention, an optical system is provided as defined in claim 1.

The optical system according to the present invention allows for an easy adjustment of the light distribution with a comparably simple layout. This is obtained by the lens which allows for a lateral light emission towards a correspondingly moveable reflector. The movability relative to the lens makes the light distribution easily adjustable. Hence, with the corresponding arrangement, the light of the light source cannot just be redirected and thus emitted in a defined direction. Furthermore, due to the relative movement of the lens and the reflector, the laterally emitted light rays exiting the lens can reach different but dedicated regions of the reflector which allow for an adjustment of the light distribution, e.g. due to differently angled parts of the reflector surface. The preferred stepless relative positions between reflector and lens results in a theoretically unlimited amount of different light distribution characteristics; e.g. because the angle α of the reflector in relation to the lens or the side-emitted light changes with the (axial) relative movement. For instance, the variation in light distribution can comprise a light distribution angle to thus allow for a variation between a narrow light distribution and a wide light distribution. Moreover, the variation in light distribution can also comprise a light distribution direction to vary the light emitting direction of the optical system.

According to the invention, the reflector comprises first guiding means to mechanically cooperate with corresponding second guiding means to allow for a movement of the reflector relative to the lens. Moreover, the lens comprises the second guiding means at the portion of the lens, through which the light exits the lens, this portion being orthogonal to the lateral direction.

With the provision of the correspondingly designed and cooperating guiding means, a precise positioning of the reflector with respect to the lens and a defined and smooth relative movement of the reflector with respect to the lens can be obtained to allow for a defined adjustment/variation of the light distribution of the optical system.

In a preferred embodiment, the reflector is relatively moveable with respect to the lens in a direction along the main light emitting direction. Thus, a defined and precise movement and positioning of the reflector with respect the side-emitted light from the lens can be obtained thus resulting in a precise and repeatable adjustment of the light distribution.

The reflector can have a three-dimensional shape expending towards the light emitting are. In particular, the reflector has a corresponding bowl-shape. Thus, differently angled portions of the reflector can be easily provided and which can be selectively positioned such that the laterally emitted light from the lens hits different portions dependent on the relative position between the reflector and the lens.

In particular, the reflector and the lens are configured to be relatively moveable with respect to each other such that the light being redirected and emitted from the lens hits different regions, preferably circumferential regions, of the reflector dependent on the relative position between the reflector and the lens. Hence, an easy light distribution adjustment can be achieved.

The reflector can be configured such that variation in light distribution is achieved in a stepless manner or in a continuous or discontinuous stepwise manner along a relative moving direction of the reflector with respect to the lens, preferably along the main light emitting direction defining the moving direction of the reflector with respect to the lens. Hence, a defined change of variation can be provided by the system.

In a preferred embodiment, the reflector is configured such that the light from the lens hits the reflector only once before exiting the optical system via the light emitting area. In other words, preferably all of the (functional) regions of the reflector are shaped and oriented such that side-emitted light from the lens which is redirected by the reflector directly exits the optical system via the light emitting area without being redirected/reflected by other portions of the optical system again. Hence, a most efficient optical system can be provided. This allows for a system with an adjustable light distribution (beam) and constant light output ratio regardless of the chosen light distribution.

In a preferred embodiment, the first guiding means mechanically cooperates with the corresponding second guiding means to allow for a longitudinal movement of the reflector relative to the lens. The first guiding means can comprise protrusions like pins or (hair) fins protruding inwardly towards the lens to cooperate with (e.g. slide within) grooves in the lens as second guiding means, wherein the protrusions particularly in the form of fins and the grooves preferably extend in parallel to the main light emitting direction. Additionally, the first guiding means can comprise protrusions like pins or (hair) fins protruding outwardly away from the lens to cooperate with (e.g. slide within) grooves in an external housing, wherein the protrusions particularly in the form of fins and the grooves preferably extend in parallel to the main light emitting direction. The guiding means are preferably (evenly) distributed over the circumference of the optical system, particularly the reflector as well as the housing and/or the lens. The first

guiding means are preferably integrally formed with the reflector. The second guiding means are comprised in the lens.

The guiding means being integrally formed with the respective element of the optical system further results in a simple layout and easy production and provision of the same. The use of pins or fins with respect to corresponding grooves further results in a safe and defined guidance of the cooperating members.

The reflector can be made of plastic, e.g. by way of injection molding. In this case, the reflector and preferably at least an inner surface of the reflector for redirecting the (side-emitted) light towards the light emitting area, comprises a reflective coating. Alternatively, the reflector can also be made of a reflective material. For instance, the reflector can be made of a metal sheet, e.g. made of MIRO® or a non-ferro material/metal. In a preferred embodiment, the metal sheet can be punched and folded. By this, also the first guiding means, e.g. the fins, can be integrally formed and thus directly provided.

The lens is preferably made of glass or plastic, the latter, e.g, by injection molding.

The lens can comprise a redirection structure to allow lateral redirection preferably of all of the light emitted by the light source towards the reflector.

The lens outer surface can at least partially taper towards the light source such that preferably all of the light emitted by the light source is directed, e.g. by total reflection, towards the redirection structure. Hence, it can be achieved that all of the light emitted by the light source is used for light emission of the optical system to thus provide a most efficient optical system.

The lens can further comprise a preferably conical opening on the side opposite to the light source and being tapered towards the light source. That conical opening preferably forms the redirection structure. The surface delimiting the opening is preferably configured (e.g. oriented) such that the light of the light source is laterally redirected by the lens, preferably by total reflection or a reflection portion being provided on said surface - i.e. in the conical opening - by a separate reflector means or the surface comprising a reflective coating, e.g., by being vaporized with a reflective material. By means of the before described conical opening or corresponding redirection structure, a simple layout for a lateral light emission of the lens can be provided. In case of the conical opening being configured such that total reflection can be achieved, the lens can be provided with a very simple layout. The reflection can be made more efficient by additionally or alternatively providing a reflector means or other kind of reflective material to provide reflection portions in/at the conical opening respectively its (inner) surface.

The lens and/or the reflector has/have a rotationally symmetrical, mirror symmetrical (e.g. in cross section elliptical), cyclical symmetrical, polygonal (in cross section, e.g. rectangular) or asymmetrically shape. In other words, the optical system can have any layout and dimension as desired.

The light source can comprise an LED or an LED cluster and is preferably provided as an LED light source or LED module. The LED module comprises an LED (chip) as well as a corresponding circuit board.

The light source is preferably placed in an opening of the lens to functionally emit all the light into the optical system. "Functionally emit" means that preferably all the light emitted by the light source is used for obtaining the function of the optical system; i.e. for light emission of the optical system via the light emitting area including adjustment of the light distribution.

Further embodiments and advantages of the present invention will be now described with respect to the Figures of the appended drawings.
- Figure 1: shows a perspective view of an optical system according to a first embodiment of the present invention,
- Figure 2: shows a cross sectional side view of the optical system according to Figure 1,
- Figure 3: shows the optical system according to Figure 2 with an exemplary light path,
- Figure 4: shows a perspective view of the lens of the optical system according to Figure 1,
- Figure 5: shows the lens of Figure 4 in a simplified manner showing the light path of the lens for lateral light emission on the left handed side of the lens,
- Figure 6: shows a perspective top view of a reflector in association with a lens of the optical system according to Figure 1,
- Figure 7: shows different steps of the production of a reflector of the optical system according to Figure 1,
- Figure 8: shows a cross sectional side view of an optical system according to a second embodiment of the present invention as well as the corresponding light distribution with respect to the relative position between lens and reflector, and
- Figure 9: shows the optical system according to Figure 8 in which the reflector and the lens differ with respect to their relative position as well as the corresponding light distribution with respect to the relative position between lens and reflector.

The Figures show different embodiments of an optical system O according to the present invention. As these optical systems O are generally identical, they are described together in the following while differences between these embodiments are highlighted accordingly.

The optical system O comprises a light source 1 having a main light emitting direction D. The light source 1 can comprise an LED 10 or an LED cluster and can also comprise a corresponding circuit board 11 to define an LED module. The light source 1 or LED module can further comprise an optical element 12 for optically influencing the light emitted by the light source 1, e.g. by a defined light distribution, light direction and/or light conversion.

The optical system O further comprises a lens 2 being positioned in front of the light source 1 with respect to the light emitting direction D and being configured to redirect and emit the light of the light source 1 in a substantially lateral direction L with respect to the main light emitting direction D.

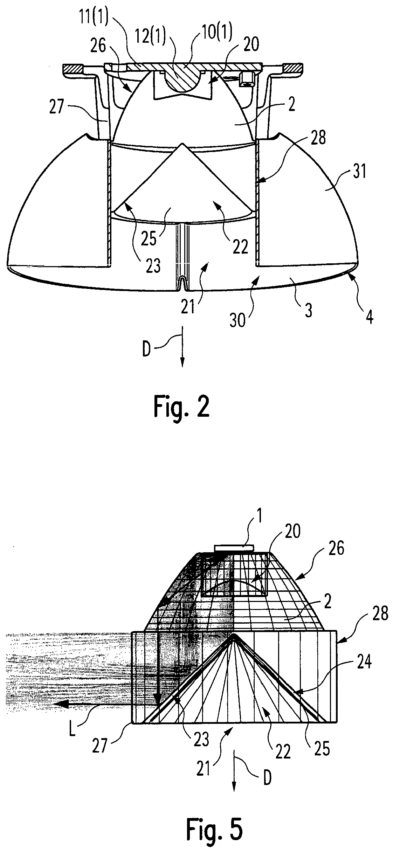

In a preferred embodiment, the light source 1 can be placed in an opening 20 of the lens 2 to functionally emit all the light into the optical system O as can be seen, for instance, with respect to Figure 5.

With respect to the shown embodiments, the lens can be rotationally symmetrical. However, the present invention is not limited to this layout and the lens 2 can also be mirror symmetrical, cyclical symmetrical, polygonal, asymmetrical or can have any other layout/shape as long as it allows for a substantially lateral - i.e. side - emission of the light coming from the light source 1.

The lens 2 is preferably provided as a solid body. The lens 2 can be made of glass or plastic. In the latter case, the lens is preferably made by injection molding.

The lens 2 comprises a redirection structure 21 to allow for lateral redirection preferably of all of the light emitted by the light source 1 and most preferably towards a reflector 3 of the optical system O which is defined in more detail herein below. The light is preferably laterally emitted over the whole circumference of the lens 2, while the invention is not limited thereto.

The lens 2 can further comprise an opening 22 on a side opposite to the light source 1. This opening 22 preferably has a conical shape. The opening 22 can be tapered towards the light source 1 and preferably forms the redirection structure 21 defined herein above. A surface 23 delimiting the opening 22 is preferably configured such that the light of the light source 1 is laterally redirected by the lens 2. In a preferred embodiment, this redirection is obtained by total reflection. In this regard, the surface 23 of the lens 2 is provided with a defined angle with respect to the main light emitting direction D to thus allow for total reflection. Alternatively, a reflection portion 24 can be provided on the surface 23 of the opening 22. This reflection portion 24 can, for instance, be provided by a separate reflector means 25, which is preferably in plane contact with the surface 23 of the opening 22. It is also possible that the surface 23 comprises a reflective coating which can be obtained, for instance by the surface 23 being vaporized with a corresponding reflective material.

As can be seen in the preferred embodiments, the outer surface 26 of the lens 2 can at least partially taper towards the light source 1 such that preferably all of the light emitted by the light source 1 is directed, e.g. by total reflection, towards the redirection structure 21 as can be seen, for instance, with respect to Figure 5. The portion 28 of the lens 2 through which the side-emitted light exits the lens 2 is preferably orthogonal to this lateral direction and preferably in parallel with the main light emitting direction D. In a preferred embodiment, this part 28 of the lens 2 has a cylindrical shape.

The optical system O further comprises the already mentioned reflector 3. The reflector 3 surrounds the lens 2 such that the light being redirected and (laterally) emitted from the lens 2 is redirected by the reflector 3 towards a light emitting area 4 of the optical system O. The light emitting area 4 can be provided as a light emitting opening of the reflector 3 preferably at an end of the reflector 3 opposite to the light source 1 and in front of the light source with respect to the main light emitting direction D.

The reflector 3 can have a shape expanding towards the light emitting area 4. In a preferred embodiment, the reflector 3 has a bowl-shape, which continuously or discontinuously widens towards the light emitting area 4.

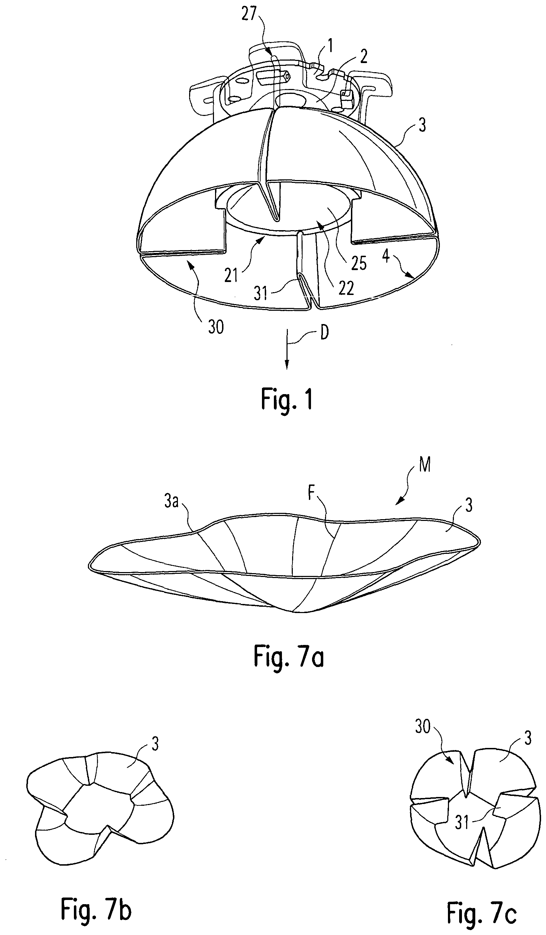

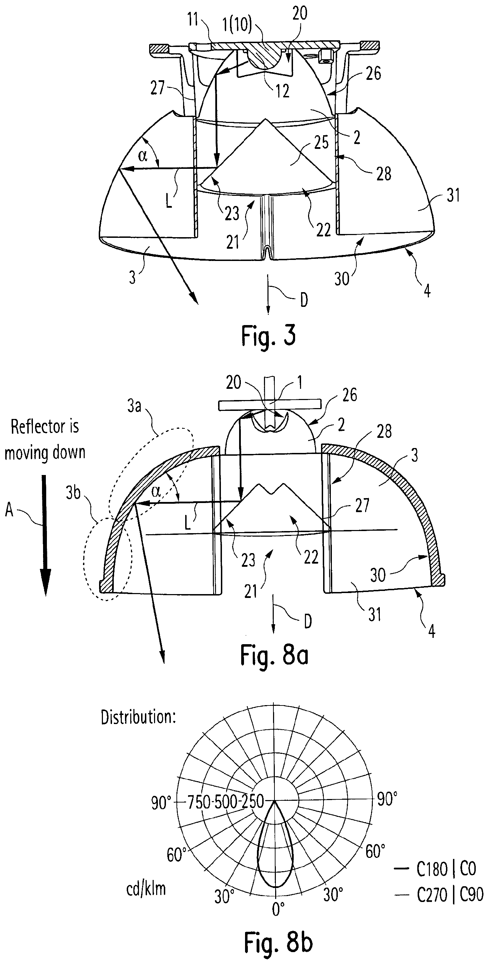

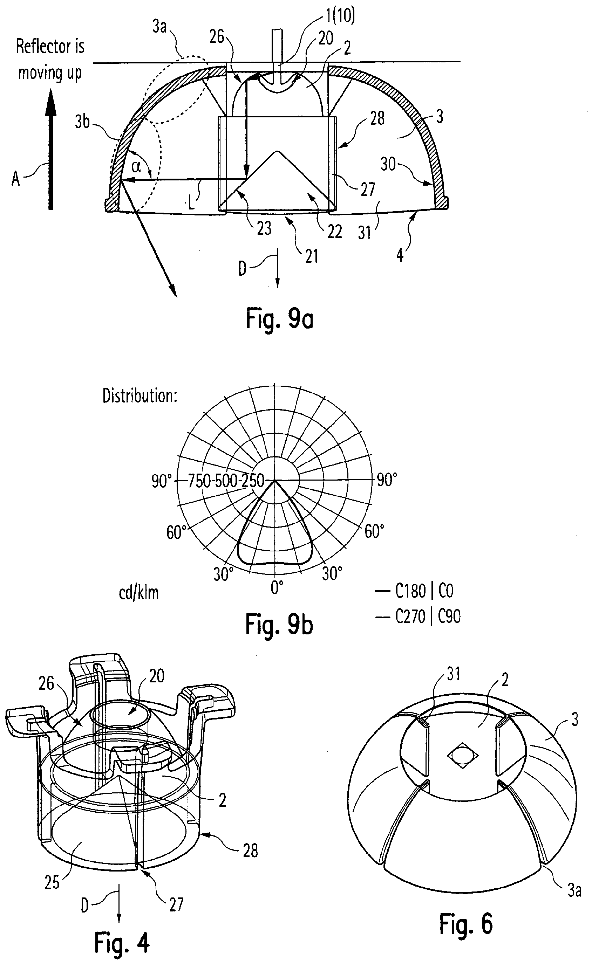

The reflector 3 can be made of plastic, e.g. by way of injection molding (see, e.g, the embodiments of figures 8 and 9). In this case, the reflector 3 can comprise a reflective coating. Preferably, this reflective coating is provided at least on an inner surface 30 of the reflector 3 for redirecting the light towards the light emitting area 4. The reflector 3 can also be made of a reflective material so that no additional reflection means is necessary. In a preferred embodiment, the reflector 3 can be made of a metal sheet M, e.g. made of a non-ferro material/metal or MIRO® (see, e.g, the embodiments of figures 1 and 7).

In a most preferred embodiment clearly depicted in figure 7, the reflector 3 made of a metal sheet can be obtained by the metal sheet M being punched and folded - e.g. along defined folding lines F - to integrally form the reflector 3 having a three-dimensional shape as defined, for instance, herein above; e.g. a bowl-shape. The reflector 3 can be rotationally symmetrical, mirror symmetrical, cyclical symmetrical (as shown in the embodiments), polygonal, asymmetrical or can have any other desired shape.

According to the invention, the reflector 3 is relatively moveable with respect to the lens 2 such that a light distribution of the light being redirected by the reflector 3 towards the light emitting area 4 varies dependent on the relative position between the reflector 3 and the lens 2. This is, for instance, shown in the embodiments of figures 8 and 9 showing two different relative positions between the reflector 3 and the lens 2. For instance, the variation in light distribution can comprise a light distribution angle (see, for instance, figures 8b resulting in a narrow light distribution and 9b resulting in a wide light distribution) and/or a light distribution direction. In a preferred embodiment, the reflector 3 is relatively moveable with respect to the lens 2 in a direction along the main light emitting direction D. This "up-and-down" relative movement is, for instance, depicted in figures 8a and 9a by arrows A.

In a preferred embodiment, the reflector 3 and the lens 2 are configured to be relatively moveable with respect to each other such that the light being redirected and emitted from the lens 2 towards the reflector 3 hits different regions of the reflector 3 dependent on the relative position between the reflector 3 and the lens 2. With respect to the embodiment shown in figures 8 and 9 it can be seen that in figure 9a the reflector 3 is in a position moved away from the light source 1 so that the side-emitted light L coming from the lens 2 towards the reflector 3 hits the reflector 3 at an upper region 3a; i.e. a region being distant from the light emitting area 4 so that the light hits the reflector 3 in a more or less flat angle α thus resulting in a narrow light distribution as can be seen in figure 8b. With respect to figure 9a, the reflector 3 is in a relative position with respect to the lens 2 being close to the light source 1 so that the side-emitted light L hits the reflector 3 in a lower region 3b; i.e. a region being closer/close to the light emitting area 4. The light thus hits the reflector 3 in a more or less acute angle α thus resulting in a wide(r) light distribution - compared to the position according to figure 8 - as can be gathered from figure 9b.

In a preferred embodiment, the regions 3a, 3b at which the side-emitted light L of the lens 2 hits the reflector 3 is preferably a substantially circumferential region of the reflector 3; i.e. extends substantially over the whole circumference of the reflector 3.

In a preferred embodiment, the reflector 3 is configured such that variation in light distribution is achieved in a stepless manner. Alternatively or additionally (e.g. at different regions 3a, 3b of the reflector 3) the reflector 3 can also be configured such that variation in light distribution is achieved in a continuous or discontinuous stepwise manner along a relative moving direction of the reflector 3 with respect to the lens 2 and preferably along the main light emitting direction D.

In a preferred embodiment, the reflector 3 is configured such that the light from the lens 2 - i.e. the side-emitted or laterally emitted light L - hits the reflector 3 only once before exiting the optical system O via the light emitting area 4. Hence, a most efficient optical system O can be obtained.

To allow for a relative movement of the reflector 3 and the lens 2, the reflector 3 can comprise first guiding means 31 which mechanically cooperate with corresponding second guiding means 27. These cooperating second guiding means 27 preferably allow for a longitudinal movement (e.g. an up-and-down movement) of the reflector 3 relative to the lens 2 as can be seen, for instance, in figures 8 and 9.

The second guiding means 27 are part of the lens 2.

If the second guiding means 27 are part of the lens 2, the first guiding means 31 can comprise protrusions like pins or fins protruding inwardly towards the lens 2 to cooperate with corresponding grooves in the lens 2 as second guiding means 27. The protrusions 31 particularly in the form of fins as well as the grooves 27 preferably extend in parallel - i.e. longitudinally - to the main light emitting direction D to allow for a smooth up-and-down movement of the reflector 3 relative to the lens 2.

If the second guiding means are part of an external housing of the optical system O (in an example not forming part of the invention), the first guiding means 31 can comprise protrusions like pins or fins protruding outwardly away from the lens 2 to cooperate with grooves in that external housing. The protrusions 31 particularly in the form fins as well as the grooves 27 preferably extend in parallel - i.e. longitudinally - to the main light emitting direction D to allow for a smooth up-and-down movement of the reflector 3 relative to the lens 2.

As can be seen in the embodiments, the guiding means 27, 31 are distributed - preferably evenly distributed - over the circumference of the optical system O and in particular the reflector 3 as well as the housing and/or the lens 2. Hence, the reflector 3 can be securely supported by the lens 2 to allow for an accurate and defined relative movement between the reflector 3 and the lens 2.

In a most preferred embodiment, the first guiding means 31 are integrally formed with the reflector 3. This can be achieved by the reflector 3 being made by injection moulding (see figures 8 and 9) or by being made of a metal sheet (see figures 1-3, 6, 7) being punched and folded (see figure 7) to thus integrally form the guiding means 31, e.g. the fins. Moreover, also the second guiding means 27 are preferably integrally formed with the respective member comprising the same; i.e. the external housing and/or the lens 2.

It is noted that the subject-matter of the present invention is not limited by the embodiments described herein above as long as being covered by the appended claims. In particular, the present invention is not limited to a particular shape of any of its elements as long as they allow for a corresponding light emitting path and adjustment of light distribution. Also, the relative moving direction between the reflector 3 and the lens 2 is not limited by the present invention as long as this movement allows for an adjustment of the light distribution. Moreover, the invention is not limited to the materials of the reflector 3 or lens 2. Also, the functional layout of the corresponding guiding means 27, 31 is not limited by the present invention as long as it allows a guided relative movement between the reflector 3 and the lens 2. The guiding means can be provided as separate parts or are preferably integrally formed with respective parts of the optical system. Also the type of variation of light distribution is not limited by the present invention; alike the range of light distribution angles and light distributions directions covered by the light distribution variation.

## Claims

1. Optical system (O) comprising:
a light source (1) having a main light emitting direction (D),
a lens (2) being positioned in front of the light source (1) with respect to the light emitting direction (D) and being configured to redirect and emit the light of the light source (1) in a substantially lateral direction with respect to the main light emitting direction (D),
wherein a portion (28) of the lens (2), through which the light exits the lens (2), is orthogonal to this lateral direction; and
a reflector (3) surrounding the lens (2) such that the light being redirected and emitted from the lens (2) is redirected by the reflector (3) towards a light emitting area (4) of the optical system (O),
wherein the reflector (3) is relatively moveable with respect to the lens (2) such that a light distribution of the light being redirected by the reflector (3) towards the light emitting area (4) varies dependent on the relative position between the reflector (3) and the lens (2),
wherein the reflector (3) comprises first guiding means (31), which mechanically cooperate with corresponding second guiding means (27), to allow for a movement of the reflector (3) relative to the lens (2), and
wherein the lens (2) comprises the second guiding means (27) at the portion (28) of the lens (2), through which the light exits the lens (2).

2. Optical system (O) according to claim 1, wherein the reflector (3) is relatively moveable with respect to the lens (2) in a direction along the main light emitting direction (D).

3. Optical system (O) according to any one of the preceding claims, wherein the reflector (3) and the lens (2) are configured to be relatively moveable with respect to each other such that the light being redirected and emitted from the lens (2) hits different regions (3a, 3b), preferably circumferential regions, of the reflector (3) dependent on the relative position between the reflector (3) and the lens (2).

4. Optical system (O) according to any one of the preceding claims, wherein the variation in light distribution comprises a light distribution angle and/or a light distribution direction.

5. Optical system (O) according to any one of the preceding claims, wherein the reflector (3) is configured such that variation in light distribution is achieved in a stepless manner or in a continuous or discontinuous stepwise manner along a relative moving direction of the reflector (3) with respect to the lens (2), preferably along the main light emitting direction (D).

6. Optical system (O) according to any one of the preceding claims, wherein the reflector (3) is configured such that the light from the lens (2) hits the reflector (3) only once before exiting the optical system (O) via the light emitting area (4).

7. Optical system (O) according to any one of the preceding claims, wherein the first guiding means (31) mechanically cooperates with the corresponding second guiding means (27) to allow for a longitudinal movement of the reflector (3) relative to the lens (2).

8. Optical system (O) according to any one of the preceding claims,
wherein the first guiding means (31) comprises protrusions like pins or fins protruding inwardly towards the lens (2) to cooperate with grooves in the lens (2) as the second guiding means (27), wherein the protrusions particularly in the form of fins and the grooves preferably extend in parallel to the main light emitting direction (D),
wherein the first guiding means (31) preferably further comprises protrusions like pins or fins protruding outwardly away from the lens (2) to cooperate with grooves in an external housing, wherein the protrusions particularly in the form of fins and the grooves preferably extend in parallel to the main light emitting direction (D).

9. Optical system (O) according to any one of the preceding claims, wherein the guiding means (27, 31) are distributed, preferably evenly distributed, over a circumference of the optical system (O), particularly the reflector (3) as well as the housing and/or the lens (2).

10. Optical system (O) according to any one of the preceding claims, wherein the first guiding means (31) are integrally formed with the reflector (3), and/or wherein the second guiding means (27) are integrally formed with the lens (2) and preferably with the external housing.

11. Optical system (O) according to any one of the preceding claims, wherein the reflector (3) is made of
• a reflective material, wherein the reflector (3) is preferably made of a metal sheet (M), e.g. made of a non-ferro material, preferably being punched and folded most preferably to integrally form the first guiding means (31), e.g. the fins, or
• plastic, e.g. by way of injection molding, wherein the reflector (3), at least an inner surface (30) of the reflector (3) for redirecting the light towards the light emitting area (4), comprises a reflective coating.

12. Optical system (O) according to any one of the preceding claims, wherein the lens (2) is made of glass or plastic and/or wherein the lens (2) comprises a redirection structure (21) to allow for lateral redirection preferably of all of the light emitted by the light source (1) towards the reflector (3).

13. Optical system (O) according to any one of the preceding claims, wherein the lens (2) comprises a preferably conical opening (22) on a side opposite to the light source (1) and being tapered towards the light source (1) and preferably forming the redirection structure (21), wherein a surface (23) delimiting the opening (22) is configured such that the light of the light source (1) is laterally redirected by the lens (2), preferably by total reflection or a reflection portion (24) being provided on said surface (23) by a separate reflector means (25) or the surface (23) comprising a reflective coating, e.g., by being vaporized with a reflective material.

14. Optical system (O) according to any one of the preceding claims, wherein the lens (2) outer surface (26) at least partially tapers towards the light source (1) such that preferably all of the light emitted by the light source (1) is directed, e.g. by total reflection, towards the redirection structure (21).

15. Optical system (O) according to any one of the preceding claims, wherein the light source (1) comprises an LED (10) or an LED cluster and is preferably provided as an LED light source or LED module.

16. Optical system (O) according to any one of the preceding claims, wherein the light source (1) is placed in an opening (20) of the lens (2) to functionally emit all the light into the optical system (O).

17. Optical system (O) according to any one of the preceding claims, wherein the lens (2) and/or the reflector (3) has/have a rotationally symmetrical, mirror symmetrical, cyclical symmetrical, polygonal or asymmetrical shape.

## Patentansprüche

1. Optisches System (0), umfassend:
eine Lichtquelle (1), die eine Haupt-Lichtabstrahlrichtung (D) aufweist,
eine Linse (2), die in Bezug auf die Lichtabstrahlrichtung (D) vor der Lichtquelle (1) angeordnet ist und konfiguriert ist, das Licht der Lichtquelle (1) in einer im Wesentlichen seitlichen Richtung in Bezug auf die Haupt-Lichtabstrahlrichtung (D) umzuleiten und abzustrahlen,
wobei ein Abschnitt (28) der Linse (2), über den das Licht aus der Linse (2) austritt, orthogonal zu dieser seitlichen Richtung ist; und
einen Reflektor (3), der die Linse (2) umgibt, sodass das Licht, das von der Linse (2) umgeleitet und abgestrahlt wird, durch den Reflektor (3) hin zu einer lichtemittierenden Fläche (4) des optischen Systems (0) umgeleitet wird,
wobei der Reflektor (3) in Bezug auf die Linse (2) derart relativ beweglich ist, dass sich eine Lichtverteilung des Lichts, das durch den Reflektor (3) hin zu der lichtemittierenden Fläche (4) umgeleitet wird, abhängig von der relativen Position zwischen dem Reflektor (3) und der Linse (2) verändert,
wobei der Reflektor (3) erste Führungsmittel (31) umfasst, die mit entsprechenden zweiten Führungsmitteln (27) mechanisch zusammenwirken, um eine Bewegung des Reflektors (3) relativ zu der Linse (2) zu ermöglichen, und
wobei die Linse (2) die zweiten Führungsmittel (27) an dem Abschnitt (28) der Linse (2), über den das Licht aus der Linse (2) austritt, umfasst.

2. Optisches System (0) nach Anspruch 1, wobei der Reflektor (3) in Bezug auf die Linse (2) in einer Richtung entlang der Haupt-Lichtabstrahlrichtung (D) relativ beweglich ist.

3. Optisches System (0) nach einem der vorhergehenden Ansprüche,
wobei der Reflektor (3) und die Linse (2) so konfiguriert sind, dass sie in Bezug aufeinander derart relativ beweglich sind, dass das Licht, das von der Linse (2) umgeleitet und abgestrahlt wird, abhängig von der relativen Position zwischen dem Reflektor (3) und der Linse (2), auf unterschiedliche Bereiche (3a, 3b), vorzugsweise Umfangsbereiche, des Reflektors (3) auftrifft.

4. Optisches System (0) nach einem der vorhergehenden Ansprüche,
wobei die Veränderung der Lichtverteilung einen Lichtverteilungswinkel und/oder eine Lichtverteilungsrichtung umfasst.

5. Optisches System (0) nach einem der vorhergehenden Ansprüche,
wobei der Reflektor (3) so konfiguriert ist, dass eine Veränderung der Lichtverteilung stufenlos oder kontinuierlich bzw. diskontinuierlich stufenweise entlang einer relativen Bewegungsrichtung des Reflektors (3) in Bezug auf die Linse (2), vorzugsweise entlang der Haupt-Lichtabstrahlrichtung (D), erzielt wird.

6. Optisches System (0) nach einem der vorhergehenden Ansprüche,
wobei der Reflektor (3) so konfiguriert ist, dass das Licht aus der Linse (2) nur einmal auf den Reflektor (3) trifft, bevor es das optische System (0) über die lichtemittierende Fläche verlässt.

7. Optisches System (0) nach einem der vorhergehenden Ansprüche,
wobei das erste Führungsmittel (31) mit dem entsprechenden zweiten Führungsmittel (27) mechanisch zusammenwirkt, um eine Längsbewegung des Reflektors (3) relativ zu der Linse (2) zu ermöglichen.

8. Optisches System (0) nach einem der vorhergehenden Ansprüche,
wobei das erste Führungsmittel (31) Vorsprünge wie Stifte oder Rippen umfasst, die nach innen zu der Linse (2) hin vorstehen, um mit Nuten in der Linse (2) als das zweite Führungsmittel (27) zusammenzuwirken, wobei sich die Vorsprünge, insbesondere in Form von Rippen, und die Nuten vorzugsweise parallel zur Haupt-Lichtabstrahlrichtung (D) erstrecken,
wobei das erste Führungsmittel (31) vorzugsweise ferner Vorsprünge wie Stifte oder Rippen umfasst, die von der Linse (2) weg nach außen vorstehen, um mit Nuten in einem Außengehäuse zusammenzuwirken, wobei sich die Vorsprünge, insbesondere in Form von Rippen, und die Nuten vorzugsweise parallel zur Haupt-Lichtabstrahlrichtung (D) erstrecken.

9. Optisches System (0) nach einem der vorhergehenden Ansprüche,
wobei die Führungsmittel (27, 31) über einen Umfang des optischen Systems (0), insbesondere des Reflektors (3) sowie des Gehäuses und/oder der Linse (2), hinweg verteilt, vorzugsweise gleichmäßig verteilt, sind.

10. Optisches System (0) nach einem der vorhergehenden Ansprüche,
wobei die ersten Führungsmittel (31) einstückig mit dem Reflektor (3) ausgebildet sind, und/oder wobei die zweiten Führungsmittel (27) einstückig mit der Linse (2) und vorzugsweise mit dem Außengehäuse ausgebildet sind.

11. Optisches System (0) nach einem der vorhergehenden Ansprüche,
wobei der Reflektor (3) hergestellt ist aus
• einem reflektierenden Material, wobei der Reflektor (3) vorzugsweise hergestellt ist aus einem Metallblech (M), z. B. hergestellt aus einem Nicht-Eisen-Material, vorzugsweise gestanzt und gefaltet, am bevorzugtesten, um die ersten Führungsmittel (31), z. B. die Rippen, einstückig zu bilden, oder
• Kunststoff, z. B. mittels Spritzgießen, wobei der Reflektor (3), zumindest eine Innenfläche (30) des Reflektors (3) zum Umleiten des Lichts hin zu der lichtemittierenden Fläche (4), eine reflektierende Beschichtung umfasst.

12. Optisches System (0) nach einem der vorhergehenden Ansprüche,
wobei die Linse (2) aus Glas oder Kunststoff hergestellt ist, und/oder wobei die Linse (2) eine Umleitungsstruktur (21) umfasst, um eine seitliche Umleitung vorzugsweise des gesamten Lichts, das durch die Lichtquelle (1) abgestrahlt wird, hin zu dem Reflektor (3) zu ermöglichen.

13. Optisches System (0) nach einem der vorhergehenden Ansprüche,
wobei die Linse (2) eine vorzugsweise konische Öffnung (22) auf einer Seite gegenüber der Lichtquelle (1) umfasst und zu der Lichtquelle (1) hin verjüngt ist und vorzugsweise die Umleitungsstruktur (21) bildet, wobei eine Fläche (23), die die Öffnung (22) begrenzt, derart konfiguriert ist, dass das Licht der Lichtquelle (1) durch die Linse (2) seitlich umgeleitet wird, vorzugsweise durch Totalreflexion oder einen Reflexionsabschnitt (24), der auf der Fläche (23) durch ein separates Reflektormittel (25) bereitgestellt ist, oder die Fläche (23) eine reflektierende Beschichtung umfasst, z. B. indem sie mit einem reflektierenden Material bedampft ist.

14. Optisches System (0) nach einem der vorhergehenden Ansprüche,
wobei sich die Außenfläche (26) der Linse (2) zumindest teilweise derart zu der Lichtquelle (1) hin verjüngt, dass vorzugsweise das gesamte, z. B. durch Totalreflexion, durch die Lichtquelle (1) abgestrahlte Licht in Richtung der Umleitungsstruktur (21) geleitet wird.

15. Optisches System (0) nach einem der vorhergehenden Ansprüche,
wobei die Lichtquelle (1) eine LED (10) oder eine LED-Gruppe umfasst und vorzugsweise als eine LED-Lichtquelle oder ein LED-Modul bereitgestellt ist.

16. Optisches System (0) nach einem der vorhergehenden Ansprüche,
wobei die Lichtquelle (1) in einer Öffnung (20) der Linse (2) platziert ist, um funktionsgemäß das gesamte Licht in das optische System (0) hinein abzustrahlen.

17. Optisches System (0) nach einem der vorhergehenden Ansprüche,
wobei die Linse (2) und/oder der Reflektor (3) eine rotationssymmetrische, spiegelsymmetrische, zyklischsymmetrische, polygonale oder asymmetrische Form aufweist/aufweisen.

## Revendications

1. Système optique (0) comprenant :
une source lumineuse (1) ayant une direction d'émission de lumière principale (D),
une lentille (2) étant positionnée devant la source lumineuse (1) par rapport à la direction d'émission de lumière (D) et configurée pour rediriger et émettre la lumière de la source lumineuse (1) dans une direction sensiblement latérale par rapport à la direction d'émission de lumière principale (D),
dans lequel une partie (28) de la lentille (2), par laquelle la lumière sort de la lentille (2), est orthogonale à cette direction latérale ; et
un réflecteur (3) entourant la lentille (2) de sorte que la lumière redirigée et émise de la lentille (2) est dirigée par le réflecteur (3) vers une zone d'émission de lumière (4) du système optique (O),
dans lequel le réflecteur (3) est relativement mobile par rapport à la lentille (2) de telle sorte qu'une distribution lumineuse de la lumière redirigée par le réflecteur (3) vers la zone d'émission de lumière (4) varie selon la position relative entre le réflecteur (3) et la lentille (2),
dans lequel le réflecteur (3) comprend des premiers moyens de guidage (31), qui coopèrent mécaniquement avec les deuxièmes moyens de guidage correspondants (27), afin de permettre un mouvement du réflecteur (3) par rapport à la lentille (2), et
dans lequel la lentille (2) comprend les deuxièmes moyens de guidage (27) au niveau de la partie (28) de la lentille (2), par lesquels la lumière sort de la lentille (2).

2. Système optique (O) selon la revendication 1, dans lequel le réflecteur (3) est relativement mobile par rapport à la lentille (2) dans une direction le long de la direction d'émission de lumière principale (D).

3. Système optique (O) selon l'une quelconque des revendications précédentes, dans lequel le réflecteur (3) et la lentille (2) sont configurés pour être relativement mobiles par rapport à l'un des deux, de sorte que la lumière redirigée et émise de la lentille (2) touche différentes régions (3a, 3b), de préférence des régions circonférentielles, du réflecteur (3) dépendant de la position relative entre le réflecteur (3) et la lentille (2).

4. Système optique (O) selon l'une quelconque des revendications précédentes, dans lequel la variation de la distribution lumineuse comprend un angle de distribution lumineuse et/ou une direction de distribution lumineuse.

5. Système optique (O) selon l'une quelconque des revendications précédentes, dans lequel le réflecteur (3) est configuré de telle sorte que la variation de la distribution de la lumière soit obtenue de manière continue ou de manière graduelle continue ou discontinue, le long d'une direction de déplacement relative du réflecteur (3) par rapport à la lentille (2), de préférence le long de la direction d'émission de lumière principale (D).

6. Système optique (O) selon l'une quelconque des revendications précédentes, dans lequel le réflecteur (3) est configuré de telle sorte que la lumière de la lentille (2) touche le réflecteur (3) une seule fois avant de sortir du système optique (0) via la zone d'émission de lumière.

7. Système optique (O) selon l'une quelconque des revendications précédentes, dans lequel les premiers moyens de guidage (31) coopèrent mécaniquement avec les deuxièmes moyens de guidage correspondants (27) pour permettre un mouvement longitudinal du réflecteur (3) par rapport à la lentille (2).

8. Système optique (O) selon l'une quelconque des revendications précédentes, dans lequel les premiers moyens de guidage (31) comprennent des saillies comme des broches ou des ailettes faisant saillie intérieurement vers la lentille (2) pour coopérer avec des rainures de la lentille (2) comme les deuxièmes moyens de guidage (27), dans lequel les saillies, particulièrement sous forme d'ailettes et les rainures s'étendent de préférence parallèlement à la direction d'émission de lumière principale (D)
dans lequel les premiers moyens de guidage (31) comprennent de préférence en outre des saillies comme des broches ou des ailettes faisant saillie intérieurement vers la lentille (2) pour coopérer avec des rainures dans un boitier externe, dans lequel les saillies, particulièrement sous forme d'ailettes et les rainures s'étendent de préférence parallèlement à la direction d'émission de lumière principale (D).

9. Système optique (O) selon l'une quelconque des revendications précédentes, dans lequel les moyens de guidage (27, 31) sont distribués, de préférence uniformément répartis, sur une circonférence du système optique (O), en particulier le réflecteur (3), ainsi que le boîtier et/ou la lentille (2).

10. Système optique (O) selon l'une quelconque des revendications précédentes, dans lequel les premiers moyens de guidage (31) sont intégralement formés avec le réflecteur (3), et/ou dans lequel les deuxièmes moyens de guidage (27) sont formés de manière intégrale à la lentille (2) et de préférence avec le boitier externe.

11. Système optique (O) selon l'une quelconque des revendications précédentes, dans lequel le réflecteur (3) est fabriqué en
• un matériau réfléchissant, dans lequel le réflecteur (3) est de préférence constitué d'une feuille métallique (M), par exemple fabriqué à partir d'un matériau non ferreux, de préférence perforé et plié, plus de préférence pour former intégralement les premiers moyens de guidage (31), par exemple les ailettes, ou
• en plastique, par exemple par moulage par injection, dans lequel le réflecteur (3), au moins une surface interne (30) du réflecteur (3) pour rediriger la lumière vers la zone d'émission de lumière (4), comprend un revêtement réfléchissant.

12. Système optique (O) selon l'une quelconque des revendications précédentes, dans lequel la lentille (2) est en verre ou plastique et/ou dans lequel la lentille (2) comprend une structure de redirection (21) pour permettre une redirection latérale de préférence de toute la lumière émise par la source lumineuse (1) vers le réflecteur (3).

13. Système optique (O) selon l'une quelconque des revendications précédentes, dans lequel la lentille (2) comprend une ouverture conique de préférence (22) d'un côté opposé à la source lumineuse (1) et est effilée vers la source lumineuse (1) et de préférence formant la structure de redirection (21), dans lequel une surface (23) délimitant l'ouverture (22) est configurée de sorte que la lumière de la source lumineuse (1) est redirigée latéralement par la lentille (2), de préférence par réflexion totale ou une partie de réflexion (24) étant fournie sur ladite surface (23) par des moyens de réflecteur distinct (25) ou la surface (23) comprenant un revêtement réfléchissant, par exemple en étant vaporisé avec un matériau réfléchissant.

14. Système optique (O) selon l'une quelconque des revendications précédentes, dans lequel la lentille (2) de la surface externe (26) s'effile au moins partiellement vers la source lumineuse (1) de telle sorte que, de préférence, toute la lumière émise par la source lumineuse (1) est dirigée, par exemple par réflexion totale, vers la structure de redirection (21).

15. Système optique (O) selon l'une quelconque des revendications précédentes, dans lequel la source lumineuse (1) comprend une LED (10) ou un groupe de LED et est de préférence fournie comme source lumineuse LED ou module LED.

16. Système optique (O) selon l'une quelconque des revendications précédentes, dans lequel la source lumineuse (1) est placée dans une ouverture (20) de la lentille (2) pour émettre fonctionnellement toute la lumière dans le système optique (O).

17. Système optique (O) selon l'une quelconque des revendications précédentes, dans lequel la lentille (2) et/ou le réflecteur (3) a/ont une forme à symétrie de rotation, à symétrie de miroir, à symétrie cyclique, polygonale ou asymétrique.
